# EUROPÄISCHE PATENTANMELDUNG

(11) **EP 1 009 089 A2**
(43) Veröffentlichungstag der Anmeldung: **14.06.2000**
(21) Anmeldenummer: 99123873.4
(22) Anmeldetag: 02.12.1999
(51) Int. Cl.: H02K 7/116

(54) **Elektrischer Stellantrieb für ein Kraftfahrzeug**

(30) Priorität: 09.12.1998 DE 19856716
(71) Anmelder: Hella KG Hueck & Co., 59552 Lippstadt (DE)
(72) Erfinder: Schiewer, Norbert, 59555 Lippstadt (DE)

(57) **Zusammenfassung**

Beschrieben wird ein elektrischer Stellantrieb für ein Kraftfahrzeug mit einem drehrichtungsumkehrbaren Antriebsmotor und einem diesem nachgeordneten Getriebe, welches im Bereich der axialen Verlängerung der Motorwelle angeordnet ist, bei dem zumindest das vordere Lagerschild des Antriebsmotors in eine halbschalenförmige Ausnehmung des Stellergehäuse eingesetzt ist und bei dem derAntriebsmotor durch eine im vorderen Bereich des Antriebsmotors seinen Umfang umfassende Doppelfeder gehalten wird, deren federnde Endabschnitte im inneren des Stellergehäuses verankert sind.

Der erfindungsgemäße Stellantrieb zeichnet sich durch einen Aufbau aus, der eine besonders einfache, kostengünstige und dabei exakte Montage des Stellmotors ermöglicht.

## Beschreibung

Die Erfindung betrifft einen elektrischen Stellantrieb für ein Kraftfahrzeug mit einem drehrichtungsumkehrbaren Antriebsmotor und einem diesem nachgeordneten Getriebe, welches im Bereich der axialen Verlängerung der Motorwelle angeordnet ist.

Die Figur 1 der DE 40 22 849 A1 zeigt einen elektrischen Stellantrieb für ein Kraftfahrzeug, bei dem der Antriebsmotor mit einem das Getriebe enthaltenden Gehäuseteil verschraubt ist. Ein solcher Aufbau ist recht kostenaufwendig.

Es soll daher zur Kosteneinsparung der Antriebsmotor zusammen mit dem Getriebe in einem gemeinsamen Gehäuse untergebracht werden. Hierbei ergibt sich nun das Problem, die verschiedenen Komponenten des Stellantriebs im Gehäuseinneren fest und auf möglichst platzsparende Weise zu montieren. Je nach vorgesehener Anwendung des Stellantriebs, ist dieser in einem Kraftfahrzeug hohen Beschleunigungen ausgesetzt; bei Verwendung am Motor, z. B. als Antrieb für die Drosselklappe, sind Beschleunigungen von bis zu 30 g zu erwarten.

Um den Antriebsmotor fest und genau zu positionieren, ist es denkbar, Schraubverbindungen vorzusehen. Diese sind aber mit Nachteilen behaftet. So weist nicht jeder Motor auf seiner abtriebsseitigen Stirnfläche vorbereitete Gewindebohrungen auf, so daß entweder die Auswahl des Antriebsmotors auf spezielle Modelle beschränkt ist oder aufwendige zusätzliche Montagemittel, z. B. Montagebleche, vorgesehen werden müssen, die überdies zusätzlichen Anbauraum erfordern. Zudem stellen Schraubverbindungen allgemein eine relativ aufwendige Montagemethode dar; und besonders, wenn dadurch eine einheitliche Montagerichtung (bei dem nachfolgend beschriebenen Stellantrieb z. B. aufbauend von oben) nicht möglich ist.

Problematisch für eine exakte Postionierung ist auch eine Befestigung des Antriebsmotors am Umfang des Gehäuses, da dessen Abmessungen im allgemeinen vergleichsweise stark toleranzbehaftet sind.

Es ist die Aufgabe der Erfindung, einen elektrischen Stellantrieb für ein Kraftfahrzeug zu schaffen, welcher unter Vermeidung der vorgenannten Nachteile eine einfache und kostengünstige Anbringung und exakte Positonierung des Antriebsmotors im Gehäuse ermöglicht.

Diese Aufgabe wird erfindungsgemäß dadurch gelöst, daß das vordere Lagerschild des Antriebsmotors in eine halbschalenförmige Ausnehmung des Stellergehäuses eingesetzt ist und daß der Antriebsmotor durch eine im vorderen Bereich des Antriebsmotors seinen Umfang umfassende Doppelfeder gehalten wird, deren federnde Endabschnitte im Inneren des Stellergehäuse verankert sind.

Die als Motorhalter fungierende Doppelfeder realisiert zudem:
- Wegnahme des Kippmomentes des Antriebsmotors um die hintere Lagerschildaufnahme
- Aufbringung einer definierten Motorandruckkraft durch Entkoppelung von Andruckfederbereich und Verankerungsbereich und damit Aufhebung der direkten Abhängigkeit zwischen Eindrucktiefe und Andruckkraft
- Ausbildung zweier Federn in den Verankerungsbereichen in Verbindung mit Aufnahmetaschen im Gehäuse, dadurch sicheres und einfaches Befestigen ohne weitere Einzelteile und Gehäusebearbeitungen.

Ein Ausführungsbeispiel eines erfindungsgemäßen Stellantriebs ist in der Zeichnung dargestellt und wird im folgenden anhand der Zeichnung näher erläutert.

Es zeigen:
- Figur 1: den Aufbau eines erfindungsgemäßen Stellantriebs ohne Gehäuse
- Figur 2: denselben Stellantrieb in einem geöffnet dargestellten Gehäuse
- Figur 3: den in der Figur 2 dargestellten Stellantrieb ohne Darstellung des Antriebsmotors und des Motorhalters.

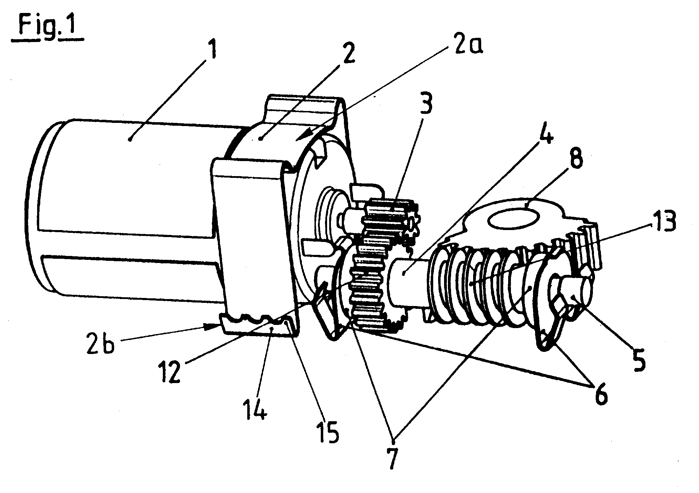

In der Figur 1 ist ein Stellantrieb gezeigt, der zur Betätigung beweglicher Gegenstände in Kraftfahrzeugen, wie z. B. der Drosselklappe oder Fensterscheiben, verwendet werden kann. Zur deutlicheren Darstellung der erfinderischen Details ist der Stellantrieb hier ohne das umgebende Gehäuse gezeigt.

Der Stellantrieb besteht aus einem umsteuerbaren Gleichstrommotor als Antriebsmotor (1), der mittels eines federnd ausgeführtem Motorhalters (2) mit dem nicht dargestellten Gehäuse verbunden ist. Um eine möglichst platzsparende, schlanke Gestaltung des Stellantriebs zur erreichen, ist das dem Antriebsmotor (1) nachgeschaltete Getriebe in der Verlängerung der Motorlängsachse angeordnet.

Das Getriebe umfaßt hierbei ein Stirnradgetriebe und ein Schneckengetriebe, wobei das mit der Motorwelle verbundene Antriebsritzel (3) und das Abtriebsschneckenrad (8) durch eine ein Stirnrad (12) und eine Schnecke (13) aufweisendes Stufenrad (4) verbunden sind.

Das Stufenrad (4) ist auf einer Achse (5) zwischen zwei Anlauffedern (6) gelagert, welche das Stufenrad (4) in den Endpostionen des Stellbereiches jeweils mit einer axialen Federkraft beaufschlagen. Die Anlauffedern (6) sind als zweischenklige Blattfedern ausgebildet, wobei sich die Federschenkel etwa v-förmig gegenüberstehen.

Die stirnseitigen Endabschnitte des Stufenrades (4) sind als radial verbreiterte Abschnitte (Axialanlaufbereiche(7)) ausgebildet und liegen an den Anlauffedern (6) an.

Der Motorhalter (2), ausgeführt als Doppelfeder, kann funktionell in zwei Bereiche unterteilt werden, und zwar in den Andruckfederbereich (2a) und in den Verankerungsfederbereich (2b). Der im mittleren Bereich des Motorhalters (2) gelegene Andruckfederbereich (2a) ist entsprechend der Umfangsgeometrie des Antriebsmotors (1) ausgebildet. Der Verankerungsfederbereich (2b) besteht aus zwei federnden Endabschnitten (14) des Motorhalters (2), welche in ihren Endbereichen jeweils Krallen (15) ausbilden.

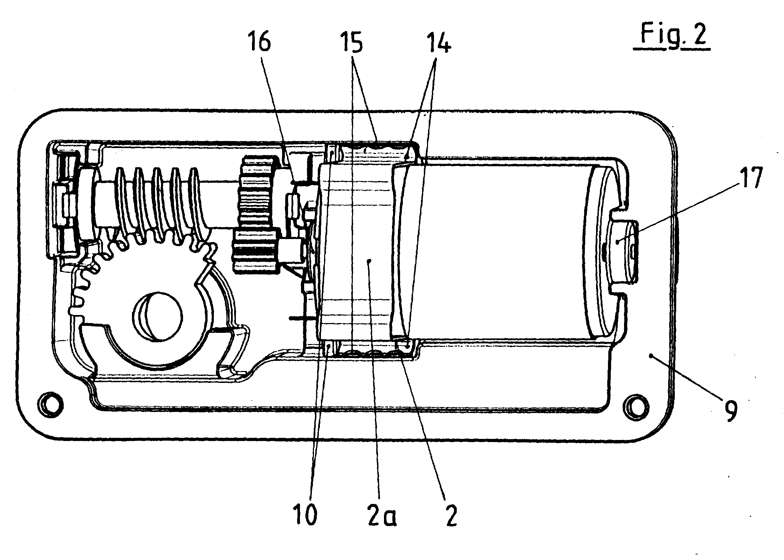

Wie die Figur 2 zeigt, sind die federnden Endabschnitte (14) in Aufnahmetaschen (10) des Gehäuses (9) eingesetzt, wobei die Krallen (15) eine sichere Verankerung des Motorhalters mit dem Gehäuse (9) bewirken. Die Befestigung des Antriebsmotors (1) mittels des Motorhalters (2) ist montagetechnisch besonders einfach und kostengünstig durch einfaches Aufdrücken realisierbar. Der Antriebsmotor (1) wird nach Montage des Motorhalters (2) durch dessen Andruckfederbereich (2a) sicher, und zwar auch bei erheblichen auf den Stellantrieb einwirkenden Beschleunigungskräften, gehalten. Ein weiterer Vorteil dieser Montagemethode besteht darin, daß der federnd ausgeführte Motorhalter (2) Toleranzen der Umfangsgeometrie des Antriebsmotors problemlos ausgleicht.

Die Feinpositionierung des Antriebsmotors (1) erfolgt in seinem vorderen Bereich durch sein vorderes Lagerschild (16), welches, wie auch sein hinteres Lagerschild (17), in eine halbschalenförmige Ausnehmung im Gehäuse (9) eingesetzt ist. Des weiteren ist zur axialen Fixierung des Antriebsmotors (1) dessen Rückseite mit einer Wand des Gehäuses (9) verschraubt.

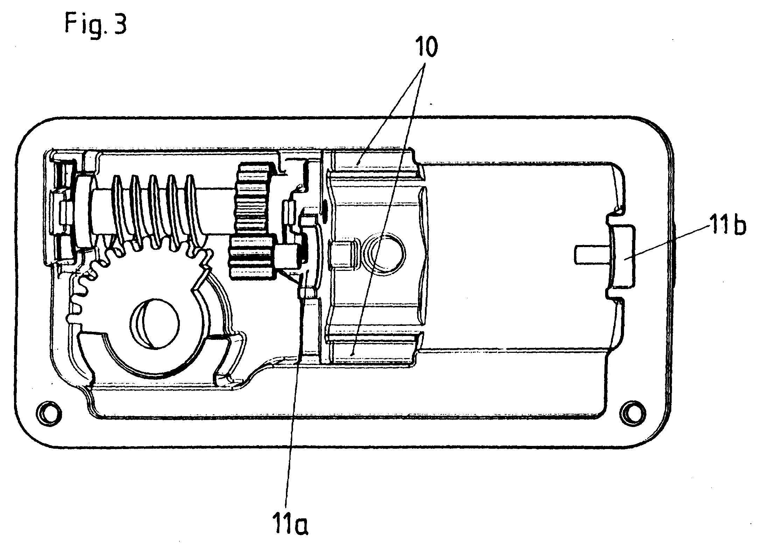

Figur 3 verdeutlicht, unter Weglassung der Darstellung des Antriebsmotors und des Motorhalters, die Anordnung der Aufnahmetaschen (10) für die Verankerungsbereiche des Motorhalters sowie die halbschalenförmigen Ausnehmungen (11a, 11b) des Gehäuses (9), die im montierten Zustand die Lagerschilde (16,17) des Antriebsmotors aufnehmen.

### Bezugszeichen

- 1: Antriebsmotor
- 2: Doppelfeder (Motorhalter)
- 2a: Andruckfederbereich
- 2b: Verankerungsfederbereich
- 3: Antriebsritzel
- 4: Stufenrad
- 5: Achse
- 6: Anlauffedern
- 7: Axialanlaufbereiche (des Stufenrades)
- 8: Abtriebsschneckenrad (Abtriebszahnsegment)
- 9: (Steller-)Gehäuse
- 10: Aufnahmetaschen
- 11a, 11b: Ausnehmungen
- 12: Stirnrad
- 13: Schnecke
- 14: federnde Endabschnitte
- 15: Krallen
- 16: vorderes Lagerschild
- 17: hinteres Lagerschild

## Patentansprüche

1. Elektrischer Stellantrieb für ein Kraftfahrzeug mit
einem drehrichtungsumkehrbaren Antriebsmotor und einem diesem nachgeordneten Getriebe, welches im Bereich der axialen Verlangerung der Motorwelle angeordnet ist,
**dadurch gekennzeichnet,**
- daß das vordere Lagerschild (16) des Antriebsmotors (1) in eine halbschalenförmige Ausnehmung (11a) des Stellergehäuse (9) eingesetzt ist und
- daß der Antriebsmotor (1) durch eine im vorderen Bereich des Antriebsmotors (1) seinen Umfang umfassende Doppelfeder (2) gehalten wird, deren federnde Endabschnitte (14) im Inneren des Stellergehäuse (9) verankert sind.

2. Elektrischer Stellantrieb nach Anspruch 1, dadurch gekennzeichnet, daß die Endabschnitte (14) der Doppelfeder (9) Krallen (15) aufweisen, welche in Aufnahmetaschen (10) des Stellergehäuses (9) verankert sind.

3. Elektrischer Stellantrieb nach Anspruch 1, dadurch gekennzeichnet, daß das hintere Lagerschild (17) des Antriebsmotors (1) in eine halbkreisförmige Ausnehmung (11a) des Stellergehäuses (9) eingesetzt ist und die Rückseite des Antriebsmotor (1) mit einer Wand des Stellergehäuses (9) verschraubt ist.
